# EUROPEAN PATENT SPECIFICATION

(11) **EP 1 661 871 B1**
(45) Date of publication and mention of the grant of the patent: **20.10.2010**
(21) Application number: 04425891.1
(22) Date of filing: 25.11.2004
(51) Int. Cl.: C04B 40/00

(54) **Additive for the manufacture of cement free of soluble chromates**
Zusatzmittel zur Herstellung von chromatfreiem Zement
Additif pour la fabrication des ciments sans chromate

(43) Date of publication of application: 31.05.2006
(73) Proprietor: Mapei S.p.A., I-20158 Milano (IT)
(72) Inventor: Cerulli, Tiziano, 20158 Milano (IT); Magistri, Matteo, 20158 Milano (IT); Bravo, Anna, 20158 Milano (IT); Nicodemi, Michele, 20158 Milano (IT); Morchio, Federico, 20158 Milano (IT); Squinzi, Marco, 20158 Milano (IT)
(74) Representative: Minoja, Fabrizio

(56) References cited:
- EP-A- 1 505 045
- WO-A-00/06517
- WO-A-91/15435
- WO-A-99/37593
- DE-U1-202004 010 467
- PATENT ABSTRACTS OF JAPAN vol. 2003, no. 09, 3 September 2003 (2003-09-03) & JP 2003 137628 A (DENKI KAGAKU KOGYO KK), 14 May 2003 (2003-05-14)

## Description

This invention relates to liquid cement additives, which contain reducing agents in a form protected against atmospheric oxygen.

The invention also relates to the use of said additives for the production of cement, mortar or concrete with a low content of water-soluble chromates [Cr(VI)].

### Prior art

All the hydraulic binders produced from clinker contain transition metals in a high oxidation state such as Mn(VII) and Cr(VI), which are water-soluble in variable quantities, generally ranging between 5 and 20 ppm (mg/kg) in the case of Cr(VI). These quantities derive mainly from the original clinker, due to the raw materials entering the kiln, and partly as a result of wear of the high chromium steel grinding media used when grinding raw meal. This amount of chrome is converted into Cr(VI) by heating in an oxidising environment.

If chromates come into contact with the operator's skin, in the long run they cause dermatitis, which has been studied and classified as an occupational disease (*Acta Dermatovener*, 53, **1973**). As a result, the European Community decided in Directive 2003/53/EC (Commission Directive of 18 June 2003) to ban the marketing and use of cement and cement-based materials containing more than 2 ppm of soluble Cr(VI) in any activity in which they come into direct contact with human skin.

CH534643, EP054314, WO84/01942 and WO84/02900 describe methods of reducing chromates in cements by adding ferrous sulphate hydrate (FeSO₄xH₂O) in quantities generally ranging between 0.3 and 1.0%. Although various methods developed to solve this problem (US4572739, EP160747, EP125267, DE19744035, DE10014468 and EP630869) have been patented and used, the Fe(II) in ferrous sulphate, which is strongly hygroscopic, undergoes slow oxidation to Fe(III) caused by the presence of moisture, and consequently loses efficiency over time, even after the cement is bagged. Moreover, if the widely used ferrous sulphate heptahydrate is added during grinding, due to its high water solubility and the high temperatures in the mill, it undergoes partial dehydration to monohydrate salt, with the consequent loss of reducing activity (*ZKG International,* 55 (3), **2002**).

Ferrous sulphate is also a corrosive agent and in the long term can damage the components of both the grinding system and the storage silos. Moreover, its hygroscopicity causes a reduction in the fluidity of the powder at all stages of handling, which is already problematic in terms of workers' health and safety.

Another method of Cr(VI) reduction, described in EP0941974 and EP 1092690, involves changes to the mixture of raw materials entering the kiln or the clinker manufacturing conditions; however these changes entail high running costs.

EP063869, EP0960865, EP0960865, EP0976696 and WO2004/052806 claim Sn(II) salts derivatised in various ways as Cr(VI) reducing agents. They are more effective but much more expensive than ferrous sulphate.

Other reducing agents, such as aliphatic aldehydes (EP0697380), Mn(II) salts (WO91/15435) and sulphides or polysulphides (EP1439154) have been patented, but need to be added in fairly large amounts before, during or after cement grinding. However, the large quantities required (up to 2%) make these procedures expensive and impractical.

According to the above-mentioned prior art, reducing agents are used in the solid state, due to their instability and their loss of reducing activity in aqueous solution as a result of rapid reaction with the water dissolved oxygen.

WO 00/06517 discloses the addition of Fe(II) or Mn(II) complexes to a cement binder, preferably in the form of a solution. EP 1 505 045 discloses a Fe(II)-containing solution for reducing the amount of chromium ions on cement. Neither document mentions W/O or W/O/W emulsions.

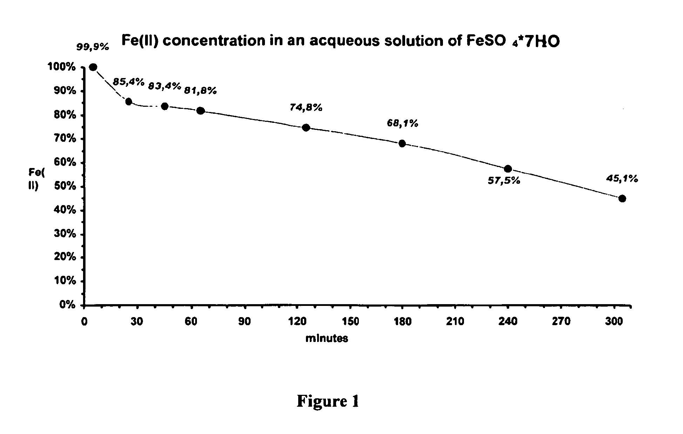

**Figure 1** shows Fe(II) content over time in an aqueous solution of FeSO₄*7H₂O left in contact with air. As can be seen, it only takes a few hours for the reducing agent content to be halved.

### Description of the invention

It has now been found (and this constitutes the subject of the invention) that an additive can be produced in liquid form, wherein the reducing agent is protected from chemical attack by external oxidants (atmospheric oxygen) until the time of its use.

Hereafter, the term "cement" stands for any hydraulic binder included in EN 197/1; the expression "cement additive" will be used to indicate any liquid product added during or after manufacture to improve the process and the performance of cement.

The liquid additive according to the invention can be added during manufacture or during cement use; besides reducing the quantity of chromates and other metals in a high oxidation state to less than 2 mg/kg of cement, it also improves physical and mechanical characteristics of the resulting cement product.

The cement additive in liquid form according to the invention comprises:
- a reducing agent for transition metals in a high oxidation state is dissolved in an aqueous solution which in turn is dispersed in an organic phase to form a double W/O emulsion or
- wherein a reducing agent is dissolved in an aqueous solution, then dispersed in an organic phase, which in turn is dispersed in a second aqueous phase to form a triple W/O/W emulsion.

The additive according to the invention contains a reducing agent selected among Fe(II), Sn(II) and Mn(II) salts, sulphides-polysulphides or mixtures thereof.

The amount of reducing agent can range between 5 and 60% by weight, and preferably between 15 and 30% by weight of the whole additive.

Preferably, the organic phase constitutes between 5 and 90% by weight of the whole additive.

W/O/W emulsions, not only is the contact between the reducing agent and oxygen prevented, but other constituents which give the additive additional properties that improve the performance of the cement product can be introduced into the external aqueous phase.

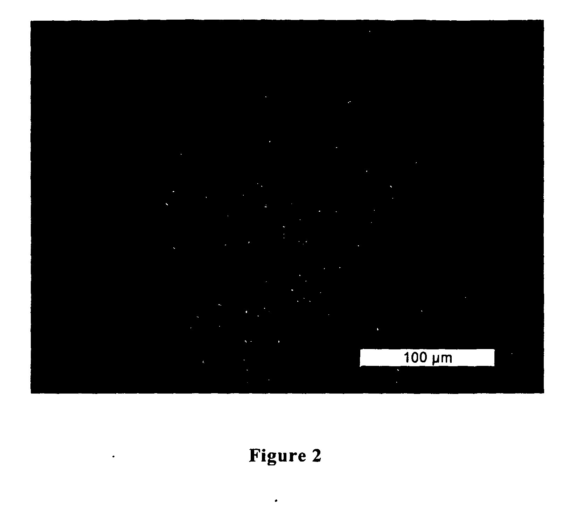

These emulsions can be prepared with known manufacturing systems ("Emulsions and Emulsion stability", Surfactant Science Series, vol 61, Ed. J. Sjöblom). **Figure 2** shows the optical microscope image of the particles of a typical additive in triple emulsion, object of the present invention.

The organic phase is preferably constituted of an oil with a high boiling point, in particular bp > 250°C. It can be constituted, for example, of glycols, aliphatic or aromatic hydrocarbon oils, silicone oils, aliphatic or aromatic esters and mixtures thereof.

The surfactants used to form the emulsion can be anionic, cationic or non-ionic, in the quantity of 0.5 to 20% in weight of the product. Viscosity-controlling agents such as pullulans, dextrans, cellulose and derivatives can also be added in the same quantities.

The additive according to the present invention can be used alone or in combination with the usual cement and concrete admixtures, such as grinding aids, strength enhancers, accelerators, retarders, plasticizers, air entraining agents, viscosity enhancers and curing agents.

Examples of these additional constituents include:
■ PHENOLS and their derivatives;
■ INORGANIC and ORGANIC ACIDS: hydrohalogenic, phosphoric and sulphonic acids, and the corresponding alkaline or alkaline earth metal salts;
■ POLYMERS: lignin sulphonates, naphthalene sulphonates and melamine sulphonates of alkaline and alkaline earth metals; polyoxyethylene and/or propylene acrylates, methacrylates and vinyl ethers, and mixtures thereof;
■ simple or complex CARBOHYDRATES and their derivatives;
■ ALKANOLAMINES: N(Y-OH)*ₙ*, wherein Y is an aliphatic chain C₁-C₁₀ and *n* is an integer between 1 and 3, and their salts of organic or inorganic acids;
■ CARBOXYLIC ACIDS: R-COOH, where R may be hydrogen, an aromatic group or an aliphatic chain C₁-C₁₀, wherein one or more carbons may have bonded -OH groups, and the corresponding salts of alkaline or alkaline earth metals;
■ ethylene and propylene GLYCOLS up to a molecular weight of 6000, and mixtures thereof;
■ THIOCYANATES of ammonium, alkaline and alkaline earth metals;
■ INORGANIC SALTS, such as chlorides, sulphates, sulphides and phosphates of alkaline and alkaline earth metals.

Depending on the stage at which it is added to the cement, the additive according to the present invention is effective at dosages of 0.01 to 5.00%, and preferably 0.05 to 1.00%.

If the additive is added inside the mill during cement manufacture, a cement free of transition metals in a high oxidation state and particularly free of Cr(VI) according to Directive 2003/53/EC, can be obtained without further additions or complications of the manufacturing system. This constitutes the advantage of the present invention while also improving the grinding process.

Even if the additive is added when the cement is mixed with water in the presence of aggregates and other admixtures in the preparation of mortar or concrete, a cement-based product free of transition metals in a high oxidation state is always obtained (in particular free of Cr(VI) as defined in Directive 2003/53/EC), with a simultaneous improvement in the physical/mechanical properties of the hydraulic binder.

Consequently the additive of the present invention allows a low-Cr(VI) cement to be produced by adding constituents that do not adversely affect its performance, but improve its properties and furthermore it is stable over time.

A further advantage is that this additive enables the reducing agent to be dosed very precisely and uniformly to the cement, and that its activity remains stable over time.

The invention will now be illustrated in greater detail by the following examples.

The Cr(VI) content of the cement was determined according to the UNICHIM MU 1693 method, which involves extraction of chromates with a water:cement ratio of 1:1, and an extraction time of 30 minutes under stirring. The Cr(VI) concentration in the aqueous solution thus obtained was determined by ion chromatography.

### EXAMPLE 1 (reference example)

An additive **A1** has been designed whose composition in weight percent is set out in **Table 1**.

**Table 1 - Composition of additive A1**

| **constituent** | **quantity (%)** |
|---|---|
| monoethylene glycol | *50.0* |
| SnCl₂ | *0.5* |
| FeCl₂ | *9.5* |
| ascorbic acid | *0.5* |
| dimethylaminopropylamine | *1.0* |
| polyoxyethylene ester of polyacrylate | *25.0* |

This additive was dosed at 0.8% by weight of cement in mortar tests prepared according to EN 196 with different cements. The results, shown in **Table 2**, demonstrate the efficiency of the additive as both a plasticizer and a soluble-chromates-reducing agent in cement.

**Table 2 - Cement evaluation according to EN 196 of cements before and after addition of 0.8% A1 to mixing water**

| **sample** | **type of cement** | **Cr(VI) in blank cement (ppm)** | **Cr(VI) in cement with 0.8% A1 (ppm)** | **entrained air in blank cement (%)** | **entrained air in cement with 0.8% A1 (%)** | **workability of blank cement** | | **workability of cement with 0.8% A1** | |
|---|---|---|---|---|---|---|---|---|---|
| | | | | | | **0 minutes** | **30 minutes** | **0 minutes** | **30 minutes** |
| ***A*** | ***CEMI 52.5 R*** | *8.9* | 0.0 | 6.1 | 5.2 | 65 | - | 140 | 118 |
| ***B*** | ***CEM II*/*B-M (LL-V) 32.5 R*** | *4.6* | 0.0 | 7.5 | 4.5 | 75 | - | 134 | 112 |
| ***C*** | ***CEM II*/*U-LL 42.5 R*** | *8.7* | 0.0 | 6.0 | 4.6 | 100 | - | 150 | 120 |
| ***D*** | ***CEM 152.5 R*** | *10.0* | 0.0 | 6.5 | 5.4 | 84 | - | 133 | 110 |

### EXAMPLE 2

An additive **A2** constituted of a double W/O emulsion has been developed and its composition in terms of weight percent is shown in **Table 3**.

**Table 3 - Composition of additive A2**

| **constituent** | **internal aqueous phase** | **organic phase** |
|---|---|---|
| water | *21.0* | - |
| FeSO₄*7H₂O | *43.3* | - |
| polysaccharide thickener | *0.2* | - |
| ascorbic acid | *0.4* | - |
| aromatic hydrocarbon oil | - | *32.6* |
| sorbitan sesquioleate | - | *2.2* |
| polyoxyethylene sorbitan monooleate | *0.3* | - |
| ***TOTAL* (%)** | ***65.2*** | ***34.8*** |

This additive was added to a series of Italian cements at the dosage of 0.2% to either the mixing water or during grinding in the laboratory mill (Bond). The results, shown in **Table 4,** demonstrate the efficiency of the additive as a soluble-chromate-reducing agent regardless of the way in which it is added to the cement.

**Table 4 - Cr(VI) content of cements (ppm) with dosage of additive A2 = 0.2%**

| **sample** | **type of cement** | **Cr(VI) in blank cement (ppm)** | **Cr(VI) after addition the mixing water (ppm)** | **Cr(VI) after addition during grinding (ppm)** |
|---|---|---|---|---|
| ***A*** | ***CEMI52.5 R*** | *8.9* | 0.0 | 0.2 |
| ***B*** | ***CEM II*/*B-M (LL-V)* 32.5 *R*** | *4.6* | 0.0 | 0.0 |
| ***C*** | ***CEM II*/*A-LL 42.5 R*** | *8.7* | 0.0 | 0.0 |
| ***D*** | ***CEM I 52.5 R*** | *10.0* | 0.5 | 1.3 |
| ***E*** | ***CEM IV*/*B (P) 32.5 R*** | *6.0* | 0.0 | 0.0 |
| ***F*** | ***CEM II*/*A-M (LL-V) 42.5R*** | *4.3* | 0.0 | 0.0 |
| ***G*** | ***CEM I 42.5 R*** | *9.9* | 0.2 | 0.5 |
| ***H*** | ***CEM I 52.5R*** | *8.6* | 0.0 | 0.2 |
| ***I*** | ***CEM I 52.5 R*** | *11.2* | 1.2 | 1.4 |
| ***L*** | ***CEM IV*/*A 42.5 R*** | *7.2* | 0.0 | 0.0 |

### EXAMPLE 3

An admixture **A3** constituted by a triple W/O/W emulsion has been developed and its composition in terms of weight percent is shown in **Table 5**.

**Table 5 - Composition of additive A3**

| **constituent** | **internal aqueous phase** | **organic phase** | **external aqueous phase** |
|---|---|---|---|
| water | *33.6* | - | *11.5* |
| SnCl₂ | *24.2* | - | - |
| CaCl₂ | - | - | *5.6* |
| HCl | *0.2* | - | - |
| ascorbic acid | *0.2* | - | - |
| aromatic hydrocarbon oil | - | *23.1* | - |
| sorbitan sesquioleate | - | *1.4* | - |
| polyoxyethylene sorbitan monooleate | - | - | *0.2* |
| ***TOTAL (%)*** | ***58.2*** | ***24.5*** | ***17.3*** |

This additive was added at different dosages to the mixing water using a series of cements, which cover the entire range described in the European standard EN 197/1, supplied by different European manufacturers. The results, shown in **Table 6,** demonstrate the efficiency of the additive as a soluble-chromate-reducing agent for cements, even when very low dosages of the same are used.

**Table 6 - Cr(VI) content in cements (ppm) when additive A3 is added to the mixing water**

| **cement** | **Cr(VI) in blank cement (ppm)** | **dosage of additive (%)** | **Cr(VI) in cement after mixing (ppm)** |
|---|---|---|---|
| ***CEM I 52.5 R*** | 10.0 | *0.06* | 0.0 |
| ***CEM 11*/*A-S*** | 4.1 | *0.10* | 0.0 |
| ***CEM II*/*B-S*** | 9.8 | *0.08* | 0.0 |
| ***CEM II*/*A-LL 42.5 R*** | 9.0 | *0.06* | 0.0 |
| ***CEM II*/*A-M [(LL-P) 42.5 R]*** | 8.0 | *0.06* | 0.0 |
| ***CEM II*/*A-M [(LL-V) 42.5 R]*** | 5.5 | *0.10* | 0.0 |
| ***CEM II*/*B-M [(LL-V) 32.5 R]*** | 4.5 | *0.10* | 0.0 |
| ***CEM III*/*A* 32.5 *R*** | 6.3 | *0.06* | 0.3 |
| ***CEM IV*/*A (P) 42.5 R*** | 7.2 | *0.04* | 0.8 |
| ***CEM IV*/*B (P) 32.5 R*** | 7.3 | *0.10* | 0.0 |
| ***CEM V*/*A 32.5 R*** | 25.0 | *0.10* | 2.7 |

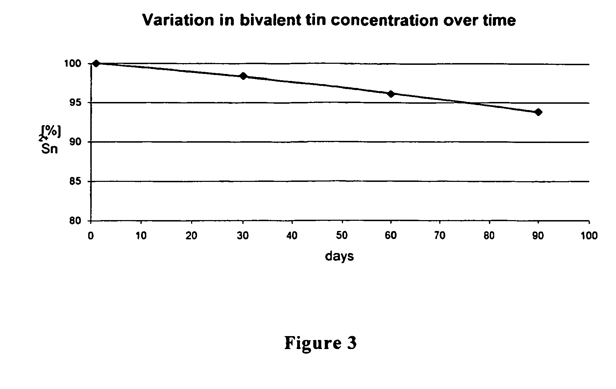

A study was conducted on this additive in order to establish whether there is any variation with time of the concentration of the reducing agent, which in this case was Sn(II). As can be seen in **Figure 3**, it does not undergo any significant variation in the first 3 months.

### EXAMPLE 4

Additive **A3**, described in Example 3, was added during grinding to a laboratory mill (Bond), in the preparation of 4 Portland cements. Each cement was prepared from different clinkers with the addition of 5% of CaSO₄*2H₂O as setting regulator. Besides to the additive's ability to reduce Cr(VI), this test was designed to establish its effects on the fineness and physical/mechanical properties of the cements, in particular as regards strength development at early ages, by comparing the data obtained from the same cements without the additive. **Table 7** shows the results relating to all the parameters investigated.

**Table 7 - Evaluation according to EN 196 of cements ground in a laboratory mill (Bond)**

| **Clinker** | **Additive dosage (%)** | **Cr(VI) (ppm)** | **Blaine spec. surface area (m²/kg)** | **Progressive passing material (%)** | | | | | **Compressive strength (MPa)** | |
|---|---|---|---|---|---|---|---|---|---|---|
| | | | | **32µm** | **40 µm** | **63 µm** | **90 µm** | **250 µm** | **1 day** | **2 days** |
| **1** | - | 6.5 | 298 | 53.0 | 63.5 | 81.5 | 89.0 | 100.0 | 16.9 | 21.4 |
| | 0.1 | 0.0 | 362 | 64.0 | 73.5 | 86.0 | 92.0 | 100.0 | 21.4 | 29.6 |
| **2** | - | 17.6 | 304 | 55.5 | 65.0 | 82.5 | 90.5 | 100.0 | 109 | 17.2 |
| | 0.1 | 8.6 | 312 | 59.5 | 70.0 | 84.5 | 93.0 | 100.0 | 11.5 | 18.6 |
| **3** | - | 93 | 292 | 49.0 | 62.0 | 77.5 | 88.0 | 100.0 | 115 | 19.0 |
| | 0.1 | 0.0 | 307 | 55.0 | 66.5 | 81.0 | 91.0 | 100.0 | 13.7 | 22.9 |
| **4** | - | 11.6 | 281 | 58.0 | 66.5 | 81.0 | 90.0 | 100.0 | 10.1 | 18.7 |
| | 0.1 | 2.0 | 303 | 59.5 | 68.5 | 83.5 | 91.5 | 100.0 | 11.1 | 21.1 |

As can be seen, the additive of the present invention proved to have a good reducing action even during grinding. It also behaves well as a grinding aid and increases early strength development.

### EXAMPLE 5

The efficiency of additive **A3**, described in Example 3, was evaluated during continuous grinding in an industrial mill. In this test, high temperature (85-95°C) clinker was fed into the mill at the rate of 23-24 t/h together with a dosage of 0.03% of a MAGA/C grinding aid, produced by MAPEI. In view of the high temperature of the input material, water was sprayed in the first chamber so that the temperature of the cement exiting the mill would be approx. 70°C. The rate of dosages of **A3** used in this test was as follows:
- 0.10% (1 kg/t of cement), for approx. 4 hours;
- 0.18%, for approx. 1 hour.

One hour after the start of addition of additive **A3**, samples were taken every half an hour (6 samples at the additive addition rate of 0.10% and 2 samples of 0.18%).

**Table 8** shows the results of the Cr(VI) analysis in relation to the quantity of reducing agent found in the various cement samples taken during the trial.

**Table 8 - Reduction of Cr(VI) during the industrial trial**

| **Sampling time (hh:mm)** | **Additive additive rate (%)** | **Cr(VI) (ppm)** | **Reducing agent (%)** |
|---|---|---|---|
| 10:30 | - | 8.42 | 0.000 |
| 11:30 | 0.10 | 3.01 | N/A* |
| 12:00 | 0.10 | 3.16 | N/A* |
| 12:30 | 0.10 | 2.18 | N/A* |
| 13:00 | 0.10 | 3.01 | N/A* |
| 13:30 | 0.10 | 2.86 | N/A* |
| 14:15 | 0.10 | 2.11 | N/A* |
| 14:45 | 0.10 | 2.30 | 0.012 |
| 15:15 | 0.18 | 0.00 | N/A* |
| 15:45 | 0.18 | 0.00 | 0.016 |

| | | | |
|---|---|---|---|
| *N/A = these samples where not analysed as far as the reducing agent was concerned | | | |

As can be seen from these results, at the dosage of 0.1%, the additive shows a good reducing activity, which tends to improve over time as the plant reaches stable operating conditions. The higher dosage of additive **A3** totally eliminates soluble Cr(VI).

The effects of the additive **A3** on the fineness and physical/mechanical properties of cement were verified on two samples. Data from the industrial trial, shown in **Table 9**, clearly indicate that the additive has also a positive effect on cement fineness, even in the absence of grinding aid.

**Table 9 - Evaluation according to EN 196 of cements ground in an industrial mill**

| **Sampling time (hh:mm)** | **Additive dosage (%)** | **Blaine spec. surface area (m²/kg)** | **Progressive passing material (%)** | | | | | **Compressive strenght (MPa)** | |
|---|---|---|---|---|---|---|---|---|---|
| | | | **32 µm** | **40 µm** | **63 µm** | **90 µm** | **250 µm** | **1 day** | **2 days** |
| 10:30 | - | 436 | 90.5 | 96.5 | 100.0 | 100.0 | 100.0 | 28.0 | 40.2 |
| 14:45 | 0.10 | 440 | 93.5 | 97.0 | 100.0 | 100.0 | 100.0 | 29.2 | 40.9 |
| 15.45 | 0.18 | 446 | 96.0 | 97.5 | 100.0 | 100.0 | 100.0 | 28.8 | 40.6 |

## Claims

1. A cement additive in liquid form wherein:
- a reducing agent for transition metals in a high oxidation state is dissolved in an aqueous solution which in turn is dispersed in an organic phase to form a double W/O emulsion or
- wherein a reducing agent for transition metals in a high oxidation state is dissolved in an aqueous solution, then dispersed in an organic phase, which in turn is dispersed in a second aqueous phase to form a triple W/O/W emulsion.

2. Additive as claimed in 1, wherein the reducing agent is selected from Fe(II), Sn(II), Mn(II), Co(II) salts, sulphides-polysulphides or mixtures thereof.

3. Additive as claimed in 1 or 2, wherein the organic phase consists of glycols, aliphatic or aromatic hydrocarbon oils, silicone oils, aliphatic or aromatic esters or mixtures thereof.

4. Additive as claimed in anyone of claims 1 to 3, also including one or more surfactants selected from among anionic, cationic or non-ionic surfactants.

5. Additive as claimed in anyone of claims 1 to 4, wherein the weight percent of the reducing agent ranges between 5 and 60% by weight of the whole additive.

6. Additive as claimed in claim 5, wherein the weight percent of the reducing agent ranges between 15 and 30% by weight of the whole additive.

7. Additive as claimed in anyone of claims 1 to 6, wherein the weight percent of the organic phase ranges between 5 and 90% of the whole additive.

8. Additive as claimed in claim 4, wherein the surfactants are present in weight percent between 0 and 20% of the whole additive.

9. Additive as claimed in anyone of claims 1 to 8, further comprising additional constituents selected from: phenols and derivatives thereof; inorganic and organic acids: hydrohalogenic, phosphoric and sulphonic acids, and the corresponding alkaline or alkaline earth metal salts; polymers: lignin sulphonates, naphtalene sulphonates and melamine sulphonates of alkaline and alkaline earth metals; polyoxyethylene and/or propylene acrylates, methacrylathes and vinyl ethers and mixtures thereof; simple or complex carbohydrates and derivatives thereof; alkanolamines: N(Y-OH)ₙ, wherein Y is an aliphatic chain C₁-C₁₀ and n is an integer between 1 and 3, and their salts with organic and inorganic acids; carboxylic acids: R-COOH, where R may be hydrogen, an aromatic group or an aliphatic chain C₁-C₁₀, wherein one or more carbons may have bonded -OH groups, and the corresponding salts of alkaline or alkaline earth metals; ethylene and propylene glycols up to a molecular weight of 6000, and mixture thereof; thiocyanates of alkaline and alkaline earth metals; inorganic salts, such as sulphates and sulphonates of alkaline and alkaline earth metals.

10. Manufacturing process for a cement, cement composition or cement based material with **less than 2 mg soluble chromates/kg of cement**, which comprises the addition to said cement, cement composition or cement based material of a cement additive as claimed in 1 to 8 in amount ranging from 0.01 to 5.00% by weight **of cement.**

11. Process as claimed in 10, wherein the additive is added in amount of 0.05 to 1.00% by weight of cement.

12. Manufacturing process for a cement or cement-based material free of soluble chromates, wherein the additive claimed in one or more of claims 1 to 9 is used in combination with the usual cement and concrete admixtures, such as grinding aids, strength enhancers, accelerators, retardants, plasticizers, air entraining agents, viscosity enhancers and curing agents.

## Patentansprüche

1. Zementadditiv in flüssiger Form, wobei:
- ein Reduktionsmittel für lJbergangsmetalle in einem hohen Oxidationszustand in einer wässrigen Lösung gelöst wird, welche wiederum in einer organischen Phase dispergiert wird, um eine doppelte Wasser/Öl-Emulsion auszubilden oder
- wobei ein Reduktionsmittel für Übergangsmetalle in einem hohen Oxidationszustand in einer wässrigen Lösung gelöst wird, dann in einer organischen Phase dispergiert wird, welche wiederum in einer zweiten wässrigen Phase dispergiert wird, um eine dreifache Wasser/Öl/Wasser-Emulsion auszubilden.

2. Additiv nach Anspruch 1, wobei das Reduktionsmittel aus Fe(II)-, Sn(II)-, Mn(II)-, Co(II)-Satzen, -Sulfiden-Polysulfiden oder deren Mischungen ausgewählt ist.

3. Additiv nach Anspruch 1 oder 2, wobei die organische Phase aus Glykolen, aliphatischen oder aromatischen Kohlenwasserstoffölen, Silikonölen, aliphatischen oder aromatischen Estern oder deren Mischungen besteht.

4. Additiv nach einem der Ansprüche 1 bis 3, welches weiterhin ein oder mehrere Tenside enthält, ausgewählt aus anionischen, kationischen oder nicht-ionischen Tensiden.

5. Additiv nach einem der Ansprüche 1 bis 4, wobei der Masseanteil des Reduktionsmittels zwischen 5 und 60 Gewichts-% des gesamten Additivs beträgt.

6. Additiv nach Anspruch 5, wobei der Masseanteil des Reduktionsmittels zwischen 15 und 30 Gewichts-% des gesamten Additivs beträgt.

7. Additiv nach einem der Ansprüche 1 bis 6, wobei der Masseanteil der organischen Phase zwischen 5 und 90 % des gesamten Additivs beträgt.

8. Additiv nach Anspruch 4, wobei die Tenside in 0 bis 20 % des gesamten Additivs vorliegen.

9. Additiv nach einem der Ansprüche 1 bis 8, welches weiterhin weitere Bestandteile umfasst, die ausgewählt sind aus: Phenolen und deren Derivaten; anorganischen und organischen Säuren; Halogenwasserstoff-, Phosphor- und Sulfonsäuren und den korrespondierenden Alkali- oder Erdalkalisalzen; Polymeren; Ligninsulfonaten, Naphtilaiensulfonaten und Melaminsulfonaten von Alkali- und Erdalkalimetallen; Polyoxyethylen- und/oder -propylen-Acrylaten, -Methacrylaten und -Vinylethern und deren Mischungen; einfachen oder komplexen Kohlenhydraten und deren Derivaten; Alkanolaminen: N(Y-OH)ₙ, wobei Y eine aliphatische C₁-C₁₀-Kette ist und n eine ganze Zahl zwischen 1 und 3 ist, und deren Salzen mit organischen und anorganischen Säuren; Carbonsäuren: R-COOH, worin R Wasserstoff, eine aromatische Gruppe oder eine aliphatische C₁-C₁₀-Kette sein kann, wobei ein oder mehrere Kohlenstoffe gebundene OH-Gruppen aufweisen können, und den korrespondierenden Salzen von Alkali- oder Erdalkalimetallen; Ethylen- und Propylen-Glykolen bis zu einem Molekulargewicht von 6000 und deren Mischungen; Thiocyanaten von Alkali- und Erdalkalimetallen; anorganischen Salzen, wie Sulfaten und Sulfonaten von Alkali- und Erdalkalimetallen.

10. Herstellungsverfahren für einen Zement, eine Zementzusammensetzung oder ein zementbasiertes Material mit weniger als 2 mg löslichen Chromaten/kg Zement, welches die Zugabe eines Zementadditives nach einem der Ansprüche 1 bis 8 zum Zement, der Zementzusammensetzung oder dem zementbasierten Material in einer Menge von 0,01 bis 5,00 Gewichts-% des Zements umfasst.

11. Verfahren nach Anspruch 10, wobei das Additiv in einer Menge von 0,05 bis 1,00 Gewichts-% des Zements zugegeben wird.

12. Herstellungsverfahren für einen Zement oder ein zementbasiertes Material frei von löslichen Chromaten, wobei das Additiv nach einem oder mehreren der Ansprüche 1 bis 9 in Kombination mit üblichem Zement und Betonzumischungen wie Mahlhilfsmitteln, Festigkeitsverbesserern, Beschleunigern, Verzögerern, Weichmachern, Porenbildnern, Viskositätsverbesserern und Härtemitteln verwendet wird.

## Revendications

1. Additif pour ciment sous forme liquide dans lequel:
- un agent réducteur pour les métaux de transition dans un haut état d'oxydation est dissout dans une solution aqueuse laquelle à son tour est dispersée dans une phase organique pour former une double émulsion E/H ou
- dans lequel un agent réducteur pour les métaux de transition dans un haut état d'oxydation est dissout dans une solution aqueuse, puis est dispersé dans une phase organique, laquelle à son tour est dispersée dans une seconde phase aqueuse pour former une émulsion triple E/H/E.

2. Additif tel que revendiqué dans 1, dans lequel l'agent réducteur est sélectionné parmi des sels de Fe(II), Sn(II), Mn(II), Co(II), des sulfides-polysulfides ou des mélanges de ceux-ci.

3. Additif tel que revendiqué dans 1 ou 2, dans lequel la phase organique se compose de glycols, d'hydrocarbures liquides aliphatiques ou aromatiques, d'huiles de silicone, d'esters aliphatiques ou aromatiques ou de mélanges de ceux-ci.

4. Additif tel que revendiqué dans l'une quelconque des revendications 1 à 3, comprenant aussi un ou plusieurs surfactants sélectionné parmi des surfactants anioniques, cationiques ou non ioniques.

5. Additif tel que revendiqué dans l'une quelconque des revendications 1 à 4, dans lequel le pourcentage en poids de l'agent réducteur varie entre 5 et 60% en poids de l'additif total.

6. Additif tel que revendiqué dans la revendication 5, dans lequel le pourcentage en poids de l'agent réducteur varie entre 15 et 30% en poids de l'additif total.

7. Additif tel que revendiqué dans l'une quelconque des revendications 1 à 6, dans lequel le pourcentage en poids de la phase organique varie entre 5 et 90 % de l'additif total.

8. Additif tel que revendiqué dans la revendication 4, dans lequel les surfactants sont présents en pourcentage en poids entre 0 et 20 % de l'additif total.

9. Additif tel que revendiqué selon l'une quelconque des revendications 1 à 8, comprenant en outre des constituants additionnels sélectionnés parmi : des phénols et dérivés de ceux-ci ; des acides inorganiques et organiques : acides hydrohalogéniques, phosphoriques et sulfoniques, et les sels de métaux alcalins ou alcalino-terreux correspondants ; des polymères : lignosulfonates, sulfonates de naphtalène et sulfonates de mélamine des métaux alcalins ou alcalino-terreux ; des acrylates, des méthacrylates et éthers de vinyle du polyoxyéthylène et/ou de propylène, et des mélange de ceux-ci ; des glucides simples ou complexes et des dérivés de ceux-ci ; des alcanolamines : N(Y-OH)n dans lesquelles Y est une chaine aliphatique C1-C10 et n est un entier entre 1 et 3, et leurs sels avec des acides organiques et inorganiques ; des acides carboxyliques :
R-COOH, où R peut être un hydrogène, un groupement aromatique ou une chaine aliphatique C1-C10 dans laquelle un ou plusieurs carbones peuvent être liés à des groupements -OH, et les sels correspondants des métaux alcalins ou alcalino-terreux ; des éthylène et propylène glycols jusqu'à un poids moléculaire de 6000, et un mélange de ceux-ci ; des thiocyanates de métaux alcalins ou alcalino-terreux, des sels inorganiques, tels que des sulfates et sulfonates de métaux alcalins ou alcalino-terreux.

10. Procédé de fabrication pour un ciment, une composition pour ciment ou un matériau à base de ciment avec moins de 2 mg de chromates solubles/kg de ciment, qui comprend l'addition audit ciment, à la composition de ciment ou au matériau à base de ciment d'un additif pour ciment tel que revendiqué dans 1 à 8 en quantité variant de 0,01 à 5,00% en poids de ciment.

11. Procédé tel que revendiqué dans la revendication 10, dans lequel l'additif est ajouté en quantité de 0,05 à 1,00% en poids du ciment.

12. Procédé de fabrication pour un ciment ou un matériau à base de ciment sans chromates solubles, dans lequel l'additif revendiqué selon une ou plusieurs des revendications 1 à 9 est utilisé en combinaison avec le ciment et les adjuvants du béton usuels, tels que des adjuvants de broyage, des amplificateurs de force, des accélérateurs, des retardants, des plastifiants, des agents entraineurs d'air, des amplificateurs de viscosité et des agents réticulants.
